# EUROPEAN PATENT SPECIFICATION

(11) **EP 3 331 112 B1**
(45) Date of publication and mention of the grant of the patent: **24.01.2024**
(21) Application number: 16832897.9
(22) Date of filing: 28.07.2016
(51) Int. Cl.: H02B 3/00, H02B 13/00

(54) **DEAERATION TOOL, AND SWITCH GEAR ELECTRICAL APPARATUS MANUFACTURING METHOD USING DEAERATION TOOL**
ENTLÜFTUNGSWERKZEUG UND VERFAHREN ZUR HERSTELLUNG EINER ELEKTRISCHEN SCHALTANLAGEVORRICHTUNG MIT EINEM ENTLÜFTUNGSWERKZEUG
OUTIL D'ÉVACUATION DE L'AIR, ET PROCÉDÉ DE FABRICATION D'APPAREIL ÉLECTRIQUE D'APPAREILLAGE DE COMMUTATION UTILISANT L'OUTIL D'ÉVACUATION DE L'AIR

(30) Priority: 31.07.2015 JP 2015151624
(43) Date of publication of application: 06.06.2018
(73) Proprietor: Mitsubishi Electric Corporation, Chiyoda-ku Tokyo 100-8310 (JP)
(72) Inventor: YAMADA Shintaro, Tokyo 100-8310 (JP); ARIOKA Masahiro, Tokyo 100-8310 (JP); KUROAKI Shintaro, Tokyo 102-0073 (JP)
(74) Representative: Meissner Bolte Partnerschaft mbB
(86) International application number: PCT/JP2016/072156
(87) International publication number: WO 2017/022618

(56) References cited:
- CN-U- 203 400 379
- DE-U1- 20 014 020
- JP-A- H0 857 995
- JP-A- S55 132 481
- JP-A- 2000 238 888
- JP-A- 2004 332 954
- JP-A- 2005 109 288
- JP-A- 2006 204 350
- JP-A- 2012 251 584
- JP-U- S 596 681
- US-A- 3 625 221
- Tel: "DI-2- MEDIUM VOLTAGE SWITCHGEAR- THE MODULAR AND COMPACT CONCEPT- User manual", , 1 January 2013 (2013-01-01), XP055518882, Retrieved from the Internet: URL:https://www.switchgearcompany.eu/downl oad/CELLEN/RING%20MAIN%20UNIT/Handleiding% 20DI-2%20ENG.pdf [retrieved on 2018-10-25]
- Anonymous: "Kanüle - Wikipedia", , 6 May 2016 (2016-05-06), XP055712580, Retrieved from the Internet: URL:https://de.wikipedia.org/w/index.php?t itle=Kanüle&oldid=154154509 [retrieved on 2020-07-07]

## Description

### Technical Field

The invention relates to a deaeration tool and a method of manufacturing switchgear electrical equipment using the deaeration tool and, in particular, to a deaeration tool used to connect electrical equipment that electrically connects plural units of switchgear and a method of manufacturing switchgear electrical equipment using the deaeration tool.

### Background Art

A solid-insulated busbar connection section of conventional switchgear has a structure of electrically and mutually connecting and supporting first electrical equipment, which is a busbar conductor (a solid-insulated conductor) of a switching device, and second electrical equipment, such as an instrument transformer or a lightning arrester, and a cross-shaped supporting insulator, which stands upright on and is fixed to a flange section by a bolt (not depicted) to support the solid-insulated conductor, is attached to a tank or a frame of the switching device (for example, see PTL 1).

This supporting insulator is manufactured of a material with required strength and an insulation property such as an epoxy resin. The supporting insulator has: a columnar section in a shape of a hollow tube that extends in a vertical direction from the flange section; and a support section in the shape of the hollow cylinder that is integrally molded with the columnar section approximately in the middle thereof in a longitudinal direction such that axes thereof cross each other, and that supports the solid-insulated conductor.

The solid-insulated conductor is a busbar conductor in which a cylindrical conductor is covered with a solid insulator, and is supported while running through the tubular support section that extends in a horizontal direction of the supporting insulator.

In a portion of the solid-insulated conductor that corresponds to a hollow portion of the columnar section, the solid-insulated conductor is provided with a portion from which the solid insulator is removed, and a surface of which is exposed, and a bolt hole that penetrates the portion in a perpendicular direction is provided therein.

"DI-2- MEDIUM VOLTAGE SWITCHGEAR- THE MODULAR AND COMPACT CONCEPT- User manual", 1 January 2013 (2013-01-01), XP055518882, Retrieved from the Internet: URL: https://www.switchgearcompany.eu/download/CELLEN/RING%20MAIN%20UNIT/ Handleiding%20DI-2%20ENG.pdf, [retrieved on 2018-10-25], forms the basis for the two-part formulation of claim 1 and discloses on pages 4-2 to 4-6 a process for installing electrical equipment in a switchgear which makes use of nylon wires as deaeration tool; this document generally relates to various equipment for medium voltage electrical energy distribution which may be considered relevant for the present invention.

### Citation List

### Patent Literature

[PTL 1] WO 2004-049530 A1

### Disclosure of the Invention

### Technical Problem

However, in a conventional switching device equipment connection device disclosed in PTL 1, a connection terminal assembly body is attached to this exposed portion. Accordingly, in the case where the second electrical equipment is inserted in the first electrical equipment, air possibly remains in a connection section when an outer wall surface of the connection section of the second electrical equipment is connected in a tightly attached state to an inner wall surface of a connection surface of the first electrical equipment.

In such a case, because a volume inside the connection section where the air can remain is reduced by pressing the first electrical equipment and the second electrical equipment against each other, an air pressure is increased to cause expansion of an inner wall of the first electrical equipment and shrinkage of an outer wall of the second electrical equipment, and an air reservoir is produced between the outer wall surface of the connection section of the second electrical equipment and the inner wall surface of the connection surface of the first electrical equipment.

As a result, there occurs a problem that the insulation property of the solid-insulated busbar connection section is significantly degraded by such an air reservoir.

The solid-insulated busbar connection section of the conventional switchgear has such a problem that the air tends to remain on the inner wall surface of the solid-insulated busbar connection section and the insulation property of the solid-insulated busbar connection section is thereby degraded.

The invention has been made to solve a problem as described above and therefore has a purpose of obtaining a deaeration tool capable of facilitating discharge of air on an inner wall surface of a connection section of switchgear electrical equipment that includes a solid-insulated busbar and preventing degradation of an insulation property of the connection section and a method of manufacturing switchgear electrical equipment using the deaeration tool.

### Solution to the Problem

According to the invention, the problem is solved by the subject-matter outlined in the independent claims 1 and 9. Advantageous further developments of the invention are set forth in the dependent claims 2 to 8.

### Advantageous Effects of the Invention

The deaeration tool according to the invention is provided with: the tubular body that has the flexibility and is formed with the air vent hole therein; the base that is formed at the one end of the body and has the suction device attachment/detachment section to/from which the suction device can be attached/detached; and the tip that is formed at the other end of the body on the opposite side from the base and has the suction port. Accordingly, work can be performed without damaging the connection section of the electrical equipment, and the air in the connection section can easily be discharged.

In addition, because the air that remains in the connection section of the switchgear electrical equipment including the solid-insulated busbar is removed by using the above-described deaeration tool, the air can easily be discharged. In this way, degradation of an insulation property of the connection section of the switchgear electrical equipment including the solid-insulated busbar can be prevented.

### Brief Description of the Drawings

- FIG. 1: includes a plan view and a side view of a deaeration tool in a first embodiment of the invention.
- FIG. 2: is a cross-sectional view taken along line X-X in FIG. 1.
- FIG. 3: is a cross-sectional view of another deaeration tool in the first embodiment of the invention that is taken along line X-X.
- FIG. 4: is a partial side view in which a section A in FIG. 1 is enlarged.
- FIG. 5: is a side cross-sectional view of a terminal component in the first embodiment of the invention.
- FIG. 6: is a side cross-sectional view of an insulation plug in the first embodiment of the invention.
- FIG. 7: includes a plan view and a side view of a shape of a tip of the deaeration tool in FIG. 1.
- FIG. 8: is a plan view in which a cross section taken along line Y-Y in FIG. 1 is seen in an arrow direction.
- FIG. 9: is a plan view of a shape of a tip of a deaeration tool in a second embodiment of the invention.
- FIG. 10: is a side view of the shape of the tip of the deaeration tool depicted in FIG. 9.
- FIG. 11: is a table of cross-sectional outlines of plural types of a deaeration tool in a third embodiment of the invention.
- FIG. 12: is a table of cross sections that depict through holes in plural types of a deaeration tool in a fourth embodiment of the invention.
- FIG. 13: includes enlarged plan views of outer surfaces of a deaeration tool in a fifth embodiment of the invention.
- FIG. 14: is a table of partial cross sections that depict connection sections of plural types of a deaeration tool in a sixth embodiment of the invention with a suction device.
- FIG. 15: includes cross-sectional views of a state where two components in the connection section depicted in a row L - column 1 in FIG. 14 are separated.
- FIG. 16: includes plan views of shapes of a tip of a deaeration tool in an eighth embodiment of the invention.
- FIG. 17: includes a plan view, a side view, and a front view of the deaeration tool in the eighth embodiment of the invention.
- FIG. 18: is an enlarged view of a section C in FIG. 17.
- FIG. 19: is a side cross-sectional view of an operation of deaeration work in a ninth embodiment of the invention.
- FIG. 20: is a plan view that is seen in a direction of line Z-Z in FIG. 19.

### Description of Embodiments

### First Embodiment

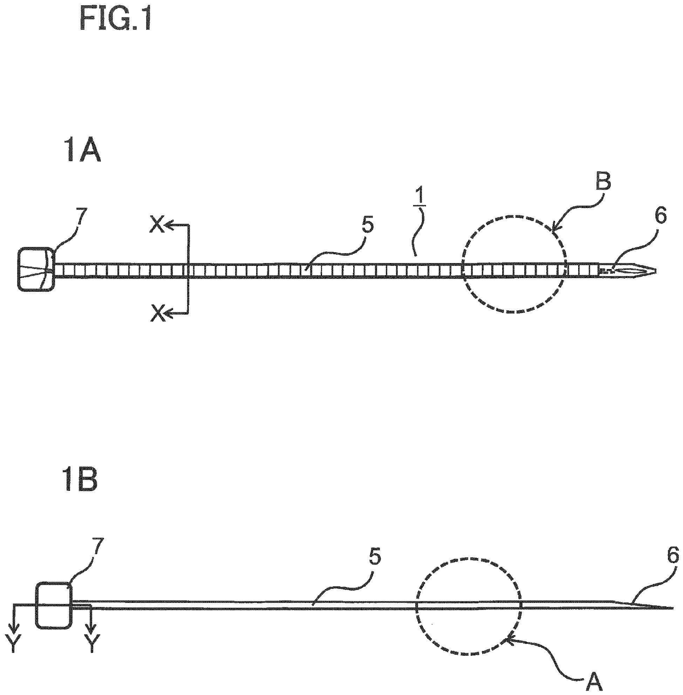

A description will hereinafter be made on a first embodiment of the invention on the basis of the drawings. FIG. 1 includes a plan view and a side view of a deaeration tool in the first embodiment of the invention. In FIG. 1, 1A is the plan view of the deaeration tool, and 1B is the side view thereof.

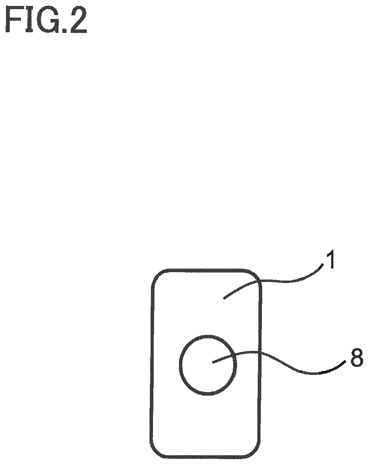

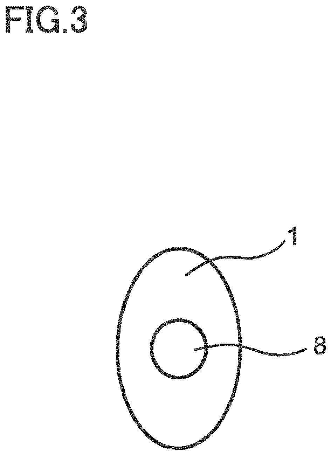

In FIG. 1, a deaeration tool 1 includes a body 5, a tip 6, and a base 7 as an end. FIG. 2 is a cross-sectional view that is taken along line X-X in FIG. 1. As depicted in FIG. 2, the deaeration tool 1 has a substantially rectangular cross-sectional shape and is structured to have rounded corners. FIG. 3 is a cross-sectional view of another deaeration tool in the first embodiment of the invention that is taken along line X-X.

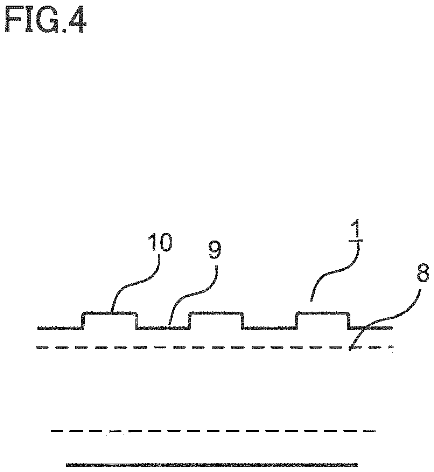

As depicted in FIG. 3, the deaeration tool 1 has a substantially oval cross-sectional shape. In FIG. 2 and FIG. 3, the deaeration tool 1 is provided with a through hole 8 therein that penetrates from the tip 6 to the base 7. FIG. 4 is a partial side view in which a section A in FIG. 1 is enlarged. In FIG. 4, plural recesses 9 and projections 10 are provided on a surface of the deaeration tool 1.

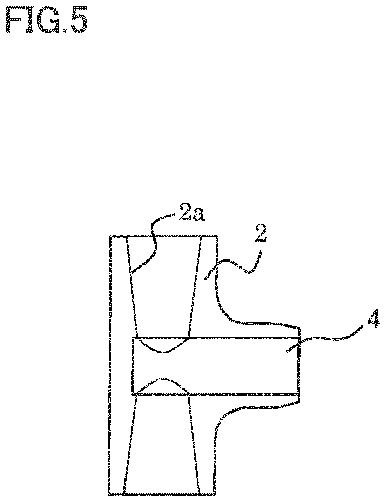

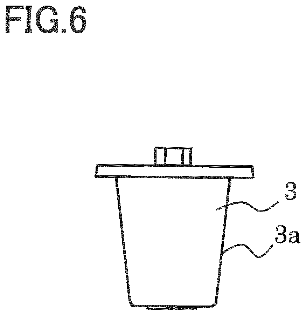

Next, a description will be made on a method of connecting switchgear electrical equipment using this deaeration tool, that is, a method of manufacturing the switchgear electrical equipment, the method having a deaeration process during connection of the electrical equipment. FIG. 5 is a side cross-sectional view of a terminal component in the first embodiment of the invention. FIG. 6 is a side cross-sectional view of an insulation plug in the first embodiment of the invention.

In FIG. 5, electrical equipment 2 is the terminal component of a switchgear busbar, for example. In FIG. 6, another electrical equipment 3 is the insulation plug, for example. In FIG. 5, the electrical equipment 2 as the terminal component includes a recessed connection section 2a, to which the other electrical equipment 3 as the insulation plug is fitted and connected.

The electrical equipment 2 as the terminal component also includes a solid-insulated busbar insertion section 4, in which a solid-insulated busbar formed by covering a cylindrical conductor with a solid insulator is inserted. In FIG. 6, the other electrical equipment 3 as the insulation plug includes a projecting connection section 3a that is fitted and connected to the connection section 2a of the electrical equipment 2 as the terminal component.

When the electrical equipment 2, such as the terminal component, and the other electrical equipment 3, such as the insulation plug, are connected, a lubricant such as paste or oil is applied to joined surfaces of the connection section 2a and the connection section 3a, on which the electrical equipment 2 and the other electrical equipment 3 are fitted, and the deaeration tool 1 is attached to either one or both of the connection section 2a as an inner wall of the electrical equipment 2 and the connection section 3a as an outer wall of the other electrical equipment 3.

The projecting connection section 3a of the other electrical equipment 3 is inserted in or screwed to an inner wall of the recessed connection section 2a of the electrical equipment 2, and the inner wall of the connection section 2a of the electrical equipment 2 and the outer wall of the connection section 3a of the other electrical equipment 3 are tightly attached. In this way, the electrical equipment 2 and the other electrical equipment 3 are connected while an insulation property is secured therebetween.

The inner wall of the connection section 2a of the electrical equipment 2 and the outer wall of the connection section 3a of the other electrical equipment 3 come in contact with each other in the middle of connection work (insertion work), and air in the connection section 2a is brought into a trapped state. Thereafter, the connection section 3a of the other electrical equipment 3 is further inserted or screwed, and the air in the connection section 2a is thereby compressed.

The pressurized air in the connection section 2a is released to the atmosphere through the through hole 8, which is provided in the deaeration tool 1. Then, after the electrical equipment 2 and the other electrical equipment 3 are connected, the deaeration tool 1 is pulled out. In this way, a pressure in the connection section 2a is lowered to the same level as the atmospheric pressure, and the connection is thereby completed.

Here, an insulation member that forms a joining recess of the electrical equipment 2, such as the terminal component, is desirably formed of a raw material that can easily be deformed and has self-restorable elasticity, such as silicone rubber or ethylene-propylene rubber, in order to hold the deaeration tool 1 between the joined surfaces.

Meanwhile, the deaeration tool 1 is formed of a raw material that has the self-restorable elasticity, such as the silicone rubber or the ethylene-propylene rubber.

In addition, as a material thereof, a material with superior flexibility and lubricity, such as a fluorine-based resin is desired.

As depicted in FIG. 2 and FIG. 3, in the first embodiment, the deaeration tool 1 has the substantially rectangular cross-sectional shape with the rounded corners or a substantially oval cross-sectional shape. With such a shape, the work can be performed without damaging an outer wall surface of the connection section 3a of the other electrical equipment 3 and an inner wall surface of the connection section 2a of the electrical equipment 2, and required strength against an insertion/extraction force during insertion/extraction of the deaeration tool 1 can be secured while a radial dimension of the connection section 2a is reduced as much as possible.

In addition, the through hole 8 that serves as a vent hole for the air is provided on the inside. Accordingly, a deaeration function is not lost even when the paste or the oil, which is used to improve the lubricity between the connection sections of the electrical equipment 2 and the other electrical equipment 3 during the connection, is adhered to a periphery of the deaeration tool 1 during the connection work.

Because the recesses 9 are provided on an outer surface of the deaeration tool 1, such an effect that a flow of the above-described paste or oil is not hindered during the connection work can be obtained. The recesses 9 of the deaeration tool 1 are provided in a manner to continue in a peripheral direction of the recessed connection section 2a (a circumferential direction of the recessed wall surface).

When the solid-insulated busbar is connected, the above-described deaeration tool 1 is attached to the connection section in advance, and the deaeration tool is pulled out after the air is sufficiently removed. In this way, the air in the connection section can reliably be removed to realize the atmospheric pressure.

As it has been described so far, according to the first embodiment of the invention, the deaeration tool 1 has the substantially rectangular cross-sectional shape with the rounded corners or the substantially oval cross-sectional shape. In this way, the work can be performed without damaging the outer wall surface of the connection section 3a of the other electrical equipment 3 and the inner wall surface of the connection section 2a of the electrical equipment 2, and the required strength against the insertion/extraction force during the insertion/extraction of the deaeration tool 1 can be secured while the radial dimension of the connection section 2a is reduced as much as possible.

The through hole 8 that penetrates the deaeration tool 1 for ventilation is provided therein. In this way, a structure of not losing the deaeration function can be obtained even when the paste or the oil, which is used to improve the lubricity between the connection sections of the electrical equipment 2 and the other electrical equipment 3 during the connection, is adhered to the periphery of the deaeration tool 1 during the connection work.

In addition, because the recesses 9, which continue in the peripheral direction of the connection section, are provided on the outer surface of the deaeration tool 1, the effect of not hindering the flow of the above-described paste or oil during the connection can be obtained.

In this way, the lubricant spreads throughout the connection sections to allow the smooth connection work. Thus, such an effect that the air pressure in the connection section can reliably be lowered to the atmospheric pressure can be obtained.

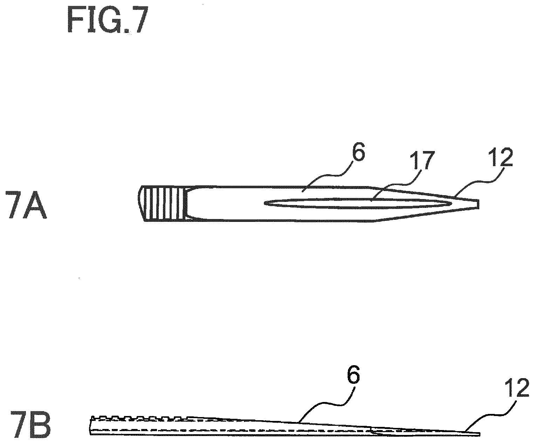

FIG. 7 includes a plan view and a side view of a shape of the tip 6 of the deaeration tool 1 in FIG. 1. In FIG. 7, 7A is the plan view of the tip 6 of the deaeration tool 1, and 7B is the side view of the tip 6 of the deaeration tool 1. As depicted in FIG. 7, the tip 6 of the deaeration tool 1 is formed to be gradually narrowed toward a tip and is formed such that a forefront section 12 has the narrowest width.

In addition, a suction port 17 is provided at the tip 6. As depicted in FIG. 7, the tip 6 of the deaeration tool 1 is shaped to be gradually narrowed toward an opposite direction from the base 7, and thus such effects that the deaeration tool 1 can be attached to a narrow portion and that a pulling force during detachment is not locally concentrated are exerted.

As it has been described so far, the shape of the tip 6 of the deaeration tool 1, which is attached to the connection section 2a, is the shape of being gradually narrowed toward the tip. In this way, even when the connection section 2a is the narrow portion, the air can be removed by using the deaeration tool 1 of this first embodiment.

In addition, because the pulling force during the detachment of the deaeration tool 1 is not locally concentrated, it is possible to prevent the deaeration tool 1 from partially remaining in the connection section 2a after the detachment of the deaeration tool 1.

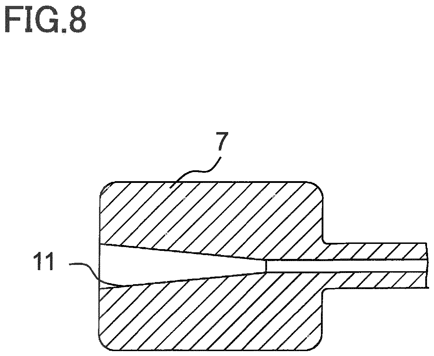

FIG. 8 is a plan view in which a cross section taken along line Y-Y in FIG. 1 is seen in an arrow direction. The base 7 as the end of the deaeration tool 1 has a wider dimension than other portions such as the body 5 and the tip 6.

A suction device attachment/detachment section 11 as a columnar hole or a conical hole that extends toward the end is formed in this base 7, and a suction device (not depicted) is connected to this suction device attachment/detachment section 11. The through hole 8 of the deaeration tool 1 communicates with the suction port 17 and the suction device attachment/detachment section 11.

As depicted in FIG. 8, the suction device attachment/detachment section 11 is formed in the base 7, and the suction device (not depicted) is connected to this suction device attachment/detachment section 11 for suctioning. In this way, the air in the connection section 2a can be removed to realize the lower pressure than the atmospheric pressure.

Then, in a deaerated state by suctioning, the connection section 2a as the inner wall surface of the electrical equipment 2 and the connection section 3a as the outer wall surface of the other electrical equipment 3 are further pressed against each other firmly. In this way, reliability of the connection section 2a and the connection section 3a can further be improved.

Being formed of the material with the superior flexibility and lubricity such as the fluorine-based resin, the above-described deaeration tool 1 suppresses degradation of the lubricity of the connection section 2a and the connection section 3a during the connection work, and can easily be detached during the detachment of the deaeration tool 1. In addition, because fibers are mixed into the material to increase pulling strength, a risk of breaking or fracturing the deaeration tool 1 during the detachment of the deaeration tool 1 can be reduced.

### Second Embodiment

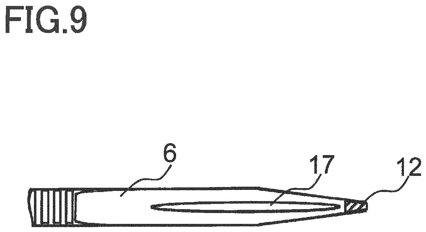

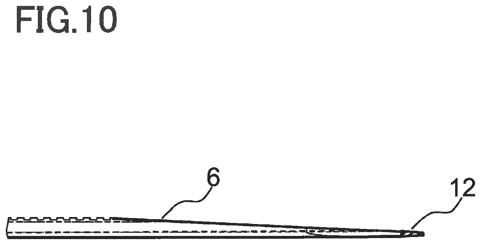

FIG. 9 is a plan view of a shape of a tip of a deaeration tool in a second embodiment of the invention. FIG. 10 is a side view of the shape of the tip of the deaeration tool depicted in FIG. 9. In the second embodiment, components denoted by the same reference signs as those in the first embodiment have the same configurations as those in the first embodiment, and thus the description thereon will not be made. As depicted in FIG. 9 and FIG. 10, in the second embodiment, the tip 6 of the deaeration tool 1 has the forefront section 12 that is painted in a vivid color such as vermilion red.

That is, the tip 6 has a portion that is painted in a different color from the body 5.

As depicted in FIG. 9 and FIG. 10, the forefront section 12 of the deaeration tool 1, which is attached to the connection section 2a, is painted in the vivid color (for example, red or the like) that differs from the other portions. In this way, when the deaeration tool 1 is detached from the connection section 2a or the connection section 3a, it is possible to easily and simply confirm that the deaeration tool 1 does not remain in the inner wall of the connection section 2a due to damage or a fracture of the tip 6 of the deaeration tool 1.

### Third Embodiment

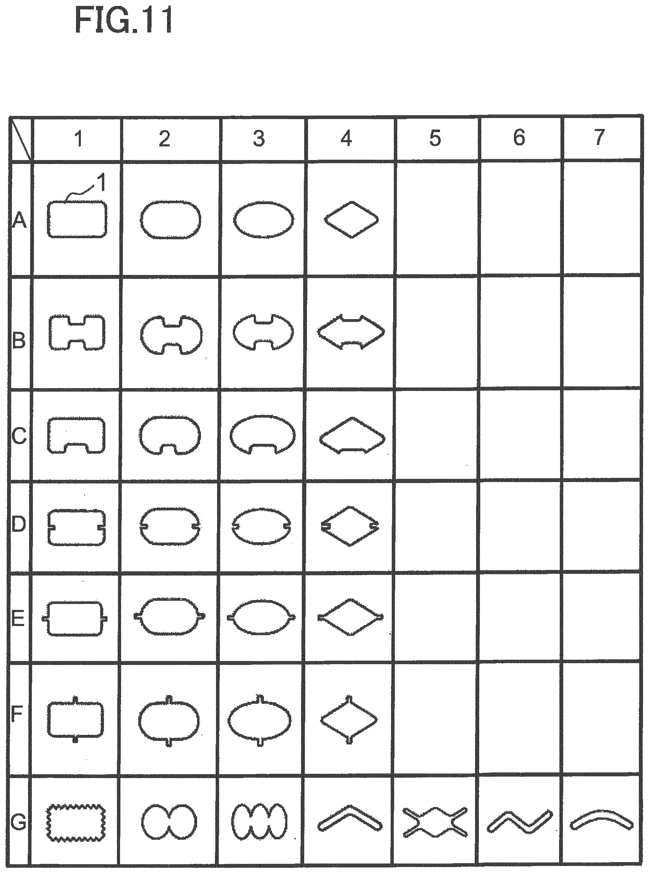

FIG. 11 is a table of cross-sectional outlines of plural types of a deaeration tool in a third embodiment of the invention. Each cross-sectional shape in FIG. 11 is a cross-sectional view of the deaeration tool that is taken along line X-X in FIG. 1.

In FIG. 11, variations in the cross-sectional shape (the outline) of the deaeration tool 1 depicted in FIG. 2 and FIG. 3 are depicted in cells represented by a vertical axis (from a row A to a row G) and a horizontal axis (a column 1 to a column 7). Respective characteristics of a column direction are that the outlines in the column 1 are substantially quadrilateral, the outlines in the column 2 are horizontally long circular, the outlines in the column 3 are ellipsoidal, and the outlines in the column 4 are substantially rhomboidal.

Respective characteristics of a row direction are that the row A depicts the outer surface with no groove, the row B depicts upper and lower surfaces, each of which has the recessed groove extending from the base 7 to the tip 6, the row C depicts the recessed groove only on the lower surface. The row D depicts both sides, each of which has the recessed groove extending from the base 7 to the tip 6, and the row E depicts both of the sides, each of which has a projection extending from the base 7 to the tip 6.

The row F depicts the upper and lower surfaces, each of which has the projection extending from the base 7 to the tip 6, and the row G depicts upper and lower sections or sides formed with the recess and/or the projection extending from the base 7 to the tip 6. Note that FIG. 11 discloses the variations in the outline of the deaeration tool 1, and presence of the through hole 8 in the cross section is selected in accordance with the definition of the invention in claim 1.

### Fourth Embodiment

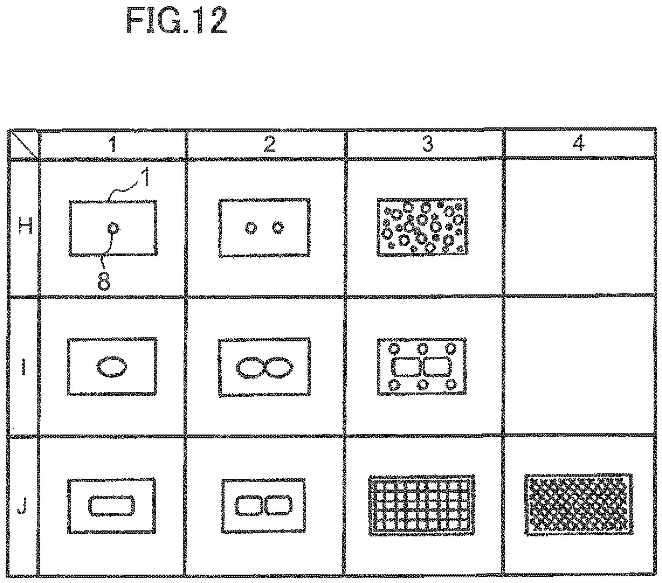

FIG. 12 is a table of cross sections that depict through holes in plural types of a deaeration tool in a fourth embodiment of the invention. Each cross-sectional shape in FIG. 12 is a cross-sectional view of the deaeration tool that is taken along line X-X in FIG. 1. In FIG. 12, variations in the cross-sectional shape (the through hole 8) of the deaeration tool 1 depicted in FIG. 2 and FIG. 3 are depicted in cells represented by a vertical axis (from a row H to a row J) and a horizontal axis (a column 1 to a column 4).

Respective characteristics of the column direction are that the column 1 depicts the one hole, the column 2 depicts the two holes, the column 3 depicts the large number of the holes arranged in a vertical direction and a horizontal direction, and the column 4 depicts the large number of the holes aligned in an orthogonal direction and arranged in the vertical and horizontal directions.

Respective characteristics of the row direction are that the row H depicts the substantially circular holes, the row I depicts the substantially ellipsoidal holes, and the row J depicts the substantially rectangular holes arranged in the horizontal, vertical, and orthogonal directions. Note that FIG. 12 discloses the variations in the shape of the through hole 8 in the deaeration tool 1, and the shape of the outer surface of the deaeration tool 1 can arbitrarily be selected.

### Fifth Embodiment

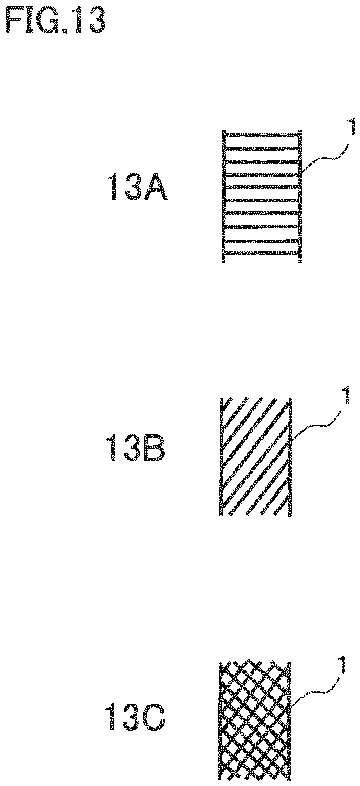

FIG. 13 includes enlarged plan views of an outer surface of a deaeration tool in a fifth embodiment of the invention. In the fifth embodiment, variations in the groove formed on the outer surface of a portion of the deaeration tool 1 that corresponds to an enlarged plan view of a section B in FIG. 1 are depicted in 13A to 13C in FIG. 13.

The deaeration tool 1 is arranged on the connection surface of the solid-insulated busbar or the like along an axial direction of the solid-insulated busbar or the like, is formed with the recesses 9 or the projections 10 as depicted in FIG. 4 so as not to hinder the flow of the paste or the oil, which is applied to the connection surface, in the peripheral direction of the wall surface of the cup-shaped (recessed) connection section 2a during the connection work of the solid-insulated bus bar, and thereby allows the flow of the paste or the oil in the peripheral direction of the wall surface of the cup-shaped (recessed) connection section 2a through this recess 9.

FIG. 13 depicts the variations in the shape of the recesses 9 or the projections 10 that are formed on the surface of the deaeration tool 1 as described above and that face the peripheral direction of the wall surface of the cup-shaped (recessed) connection section 2a.

In FIG. 13, 13A depicts the recesses 9 and the projections 10 that are provided in a manner to extend in an orthogonal direction to a longitudinal direction of the deaeration tool 1. 13B depicts the recess 9 and the projection 10 that are provided in a manner to extend obliquely in one direction with respect to the longitudinal direction of the deaeration tool 1. 13C depicts the recesses 9 and the projections 10 that are provided in a manner to extend obliquely in two directions with respect to the longitudinal direction of the deaeration tool 1 and form a net shape.

### Sixth Embodiment

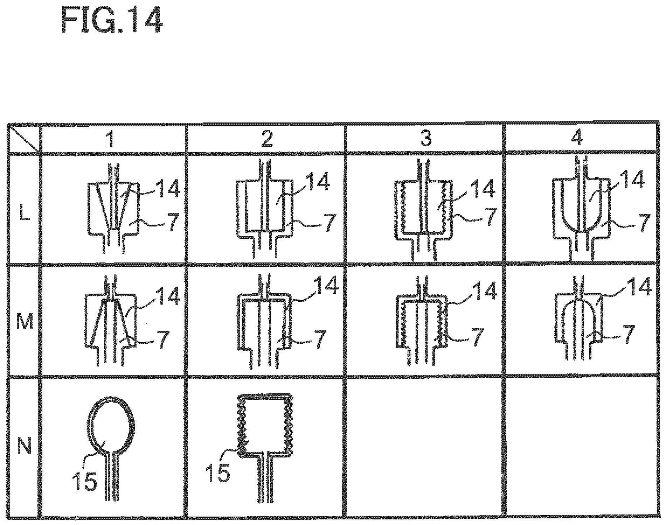

FIG. 14 is a table of partial cross sections that depict connection sections with suction devices of plural types of a deaeration tool in a sixth embodiment of the invention with a suction device. Cross-sectional shapes in FIG. 14 depict variations in connection between the base 7 of the deaeration tool 1 and a suctioning section 14 of the suction device.

In FIG. 14, variations in the cross-sectional shape of the base 7 (the suction device attachment/detachment section 11 therein) of the deaeration tool 1 depicted in FIG. 8 and a coupling structure of the suctioning section 14 as an end of the suction device (such as a syringe) that is inserted in this suction device attachment/detachment section 11 are depicted in cells represented by a vertical axis (from a row L to a row N) and a horizontal axis (a column 1 to a column 4).

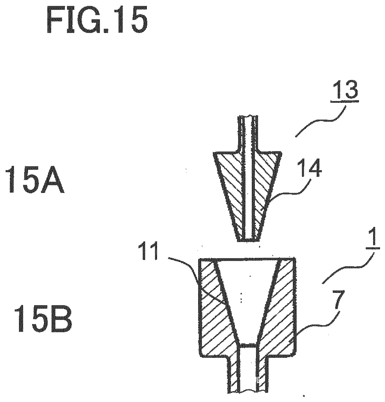

FIG. 15 is a cross-sectional view of a state where the suctioning device and the deaeration tool as two components in the coupling structure depicted in the row L - column 1 in FIG. 14 are separated. In FIG. 15, 15A depicts the projecting suctioning section 14 of a syringe-shaped suction device 13. 15B depicts the base 7 of the deaeration tool 1.

The base 7 of the deaeration tool 1 is provided with the suction device attachment/detachment section 11 as the conical hole that communicates with an intake hole of the suction device 13, and the projecting suctioning section 14 of the syringe-shaped suction device 13 is inserted in the suction device attachment/detachment section 11 as this conical hole to suction the air through the intake hole that is formed in an axial portion of the projecting suctioning section 14.

A description will herein be made on a characteristic of each of the rows and each of the columns in FIG. 14. In FIG. 14, characteristics of the column direction are as follows.

In the column 1, the suction device attachment/detachment section 11 of the base 7 has a shape of the conical hole or a conical projection, and the coupling structures to the suctioning section 14 of the suction device 13 are respectively depicted.

In the column 2, the suction device attachment/detachment section 11 of the base 7 has a shape of a cylindrical hole or a cylindrical projection, and the coupling structures to the suctioning section 14 of the suction device 13 are respectively depicted.

In the column 3, in the similar coupling structures to those in the column 2, the coupling structures in each of which both of the components are screwed are depicted.

In the column 4, in the similar coupling structures to those in the column 2, the coupling structures in each of which the components are coupled with a hole bottom or a projecting tip being in a spherical state is depicted.

Characteristics of the row direction are as follows. The row L depicts that the base 7 of the deaeration tool 1 has the suction device attachment/detachment section 11 as the recessed hole and that the suctioning section 14 of the suction device 13 has the projecting shape. The row M depicts that the base 7 of the deaeration tool 1 has the projecting shape and that the suctioning section 14 of the suction device 13 has the recessed shape.

In the row N, instead of the syringe-shaped suction device 13, the base 7 of the deaeration tool 1 has an intake chamber 15 in a dripper (the syringe) shape, so as to suction the air by an elastic restoring force of the deaeration tool 1 itself. The spherical intake chamber 15 is provided in the column 1, and the bellows-shaped intake chamber 15 is provided in the column 2.

### Seventh Embodiment

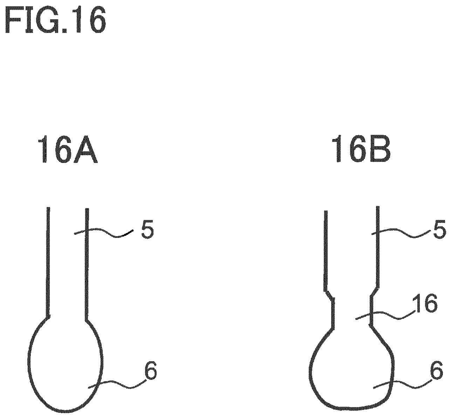

FIG. 16 includes plan views of shapes of a tip of a deaeration tool in a seventh embodiment of the invention. In the seventh embodiment, components denoted by the same reference signs as those in the first embodiment have the same configurations as those in the first embodiment, and thus a repeating description thereon will not be made. In FIG. 16, width of the tip 6 of the deaeration tool 1 is increased to be larger than width of the other portions such as the body 5 in 16A.

In 16B, the width of the tip 6 of the deaeration tool 1 is increased to be larger than the width of the other portions such as the body 5, and a narrow portion in a constricted shape is formed at a base of the tip 6. As depicted in FIG. 16B, the width of the tip 6 is increased to be larger than the width of the other portions such as the body 5, and the narrow portion in the constricted shape is formed at the base of the tip 6.

In this way, the base of a widened section operatively collects the air at a final stage of the connection work on the solid-insulated busbar, in which the deaeration tool 1 is pulled out. Thus, the deaeration function can be improved. In 16B of FIG. 16, a constricted section 16 is formed at the base of the widened section, and thus the deaeration function can further be improved from that in 16A.

Furthermore, the tip 6 is widened when compared to the other portions of the body 5, and thus can have a different shape from the other portions. As described in the second embodiment, the forefront section 12 is provided with a different shape characteristic from the other portions. In this way, such an effect of being able to easily and simply confirm that the deaeration tool 1 does not remain in the connection section 2a due to the damage or the fracture of the tip 6 of the deaeration tool 1 during the detachment can be obtained.

### Eighth Embodiment

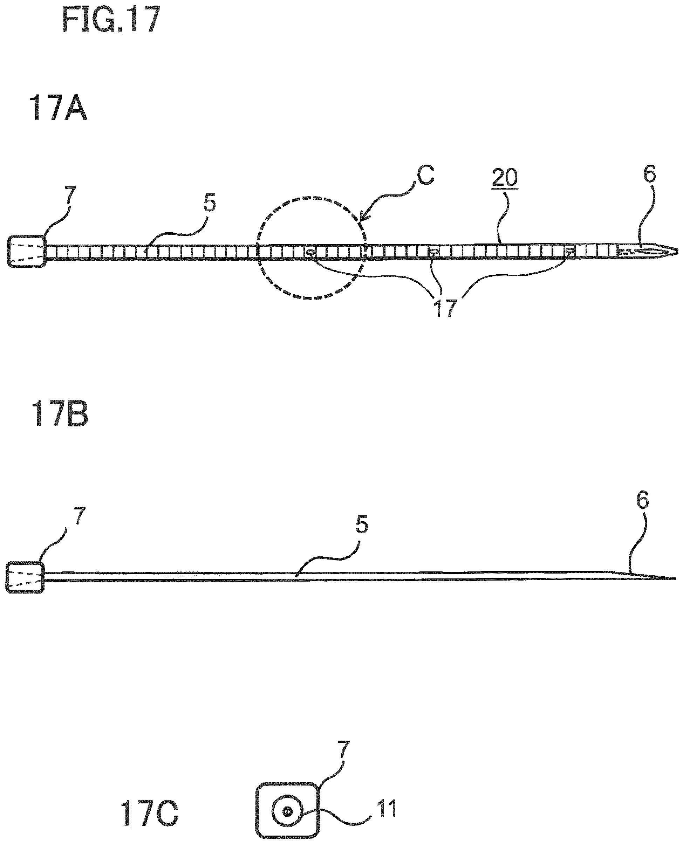

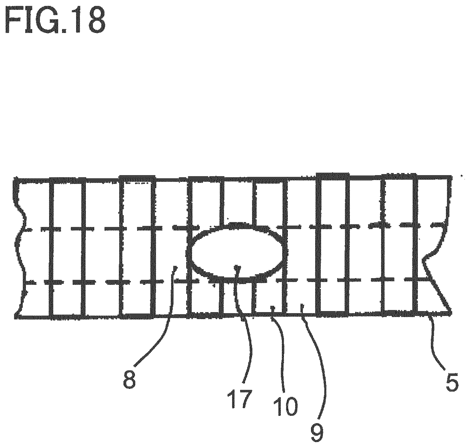

FIG. 17 includes a plan view, a side view, and a front view of a deaeration tool in an eighth embodiment of the invention. FIG. 18 is an enlarged view of a section C in FIG. 17. In FIG. 17, 17A is a plan view of a deaeration tool 20, 17B is a side view thereof, and 17C is a front view that is seen from a left side in 17A. In the deaeration tool 1 of the first embodiment, the suction port 17 is provided at the tip 6. Meanwhile, in the eighth embodiment, as depicted in FIG. 18, the suction port 17, which communicates with the through hole 8, is provided on a side of the body 5 of the deaeration tool 20.

In FIG. 18, the one suction port 17 is exemplified. However, the plural suction ports 17 may be provided in a longitudinal direction of the deaeration tool 20 as depicted in 17A of FIG. 17 in accordance with a required intake air amount and positions where suctioning of the air is desired.

Alternatively, depending on the intake air amount and the positions where suctioning of the air is desired, the suction port 17 on the side of the body 5 and the suction port 17 at the tip according to the invention as defined in claim 1 may be used together

### Ninth Embodiment

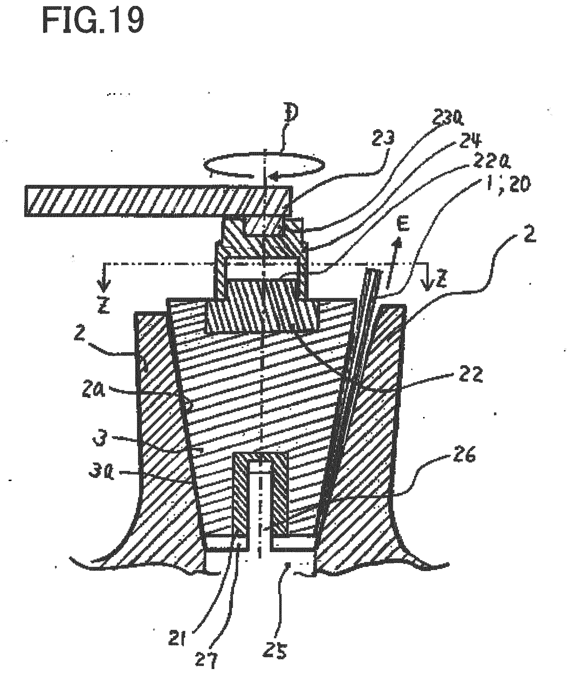

In a ninth embodiment, a description will be made on an operation of deaeration work using the deaeration tool 1 or the deaeration tool 20. FIG. 19 is a side cross-sectional view of a state during the deaeration work in the ninth embodiment of the invention.

In FIG. 19, the terminal component (the electrical equipment 2) that connects the switchgear busbar is denoted by the reference sign 2 and includes the recessed connection section 2a, to which the other electrical equipment 3 as the insulation plug is fitted and connected.

The other electrical equipment 3 as the insulation plug includes the projecting connection section 3a that is fitted and connected to the connection section 2a of the electrical equipment 2 as the terminal component.

When the electrical equipment 2, such as the terminal component, and the other electrical equipment 3, such as the insulation plug, are connected, the lubricant with the insulation property, such as the paste or the oil, is applied to the joined surfaces of the connection section 2a and the connection section 3a where the electrical equipment 2 and the other electrical equipment 3 are fitted. Grease, use of which is easy, is normally used.

As depicted in FIG. 19, the deaeration tool 1 or the deaeration tool 20 is attached in a manner to align with the axial direction of the electrical equipment 2 and the other electrical equipment 3 and to be held between the joined surfaces of the connection section 2a as the inner wall of the electrical equipment 2 and the connection section 3a as the outer wall of the other electrical equipment 3.

The other electrical equipment 3 (the insulation plug) is constructed of a conical insulator, a fastening metal insert 21 that has a female screw on an inner diameter side is arranged at one axial end thereof, and a rotary metal insert 22 used to rotate the other electrical equipment 3 (the insulation plug) is arranged at the other end thereof. The rotary metal insert 22 is formed with a rotary hexagon head 22a at an end.

In FIG. 19, a torque wrench is denoted by the reference sign 23 and has a drive shaft 23a at a head, and a socket 24 is attached to this drive shaft 23a. When this socket 24 is engaged with the hexagon head 22a to rotate the torque wrench 23, the other electrical equipment 3 (the insulation plug) is rotated about the axis.

Note that a reference sign 27 denotes a space that is formed between the tip of the other electrical equipment 3 (the insulation plug) and the recessed connection section 2a of the electrical equipment 2.

A connection conductor 25 that is connected to the busbar (not depicted) in the switchgear is arranged in the electrical equipment 2 (the terminal component), and a stud 26 that is projecting toward the other electrical equipment 3 (the insulation plug) and is formed with a male screw on an outer periphery is fixed to an end of the connection conductor 25.

When the other electrical equipment 3 (the insulation plug) is inserted in the electrical equipment 2 (the terminal component), the male screw of the stud 26 in the electrical equipment 2 (the terminal component) is engaged with the female screw of the fastening metal insert 21 of the other electrical equipment 3 (the insulation plug).

Then, when the other electrical equipment 3 (the insulation plug) is rotated in a D direction (a clockwise direction when seen from above the torque wrench 23) in FIG. 19, the other electrical equipment 3 (the insulation plug) is driven in a direction to be inserted in the electrical equipment 2 (the terminal component).

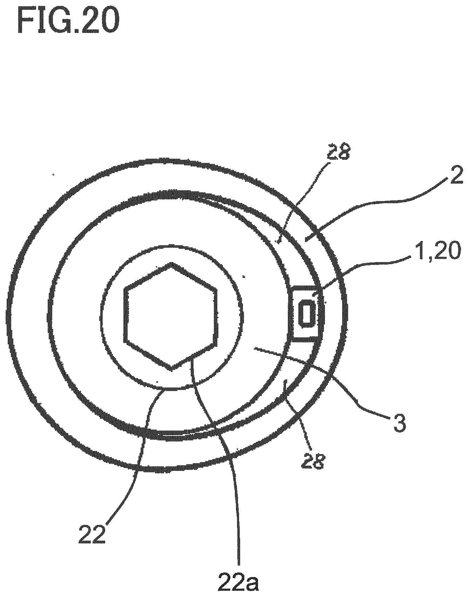

FIG. 20 is a plan view that is seen in a direction of line Z-Z in FIG. 19, and is a side cross-sectional view of the state during the deaeration work in the ninth embodiment of the invention. Because the deaeration tool 1 or the deaeration tool 20 is held between the joined surfaces, the insulation member that forms the recessed connection section 2a of the electrical equipment 2 (the terminal component) is desirably formed of a raw material that can easily be deformed and has the self-restorable elasticity, such as the silicone rubber or the ethylene-propylene rubber, in order to allow the deformation in a radial direction as depicted in FIG. 20.

Note that a space that is formed as a result of elastic deformation of the electrical equipment 2, which is caused by interposing the deaeration tool 1 or the deaeration tool 20 with elasticity between the electrical equipment 2 and the other electrical equipment 3, is denoted by the reference sign 28 and has a function as an air reservoir in which the air existing between the joined surfaces of the connection section 2a and the connection section 3a where the electrical equipment 2 and the other electrical equipment 3 are fitted moves in a peripheral direction of the joined surfaces and is collected by the rotation of the other electrical equipment 3 (the insulation plug) about the axis by the torque wrench 23.

The inner wall of the connection section 2a of the electrical equipment 2 (the terminal component) and the outer wall of the connection section 3a of the other electrical equipment 3 (the insulation plug) approach and are tightly attached to each other by the connection work (the insertion work).

Accordingly, the air in a tightly attached portion between the connection section 2a (the terminal component) and the connection section 3a of the other electrical equipment 3 (the insulation plug) is brought into the trapped state. Thereafter, the connection section 3a of the other electrical equipment 3 is further screwed to the stud 26 by the torque wrench 23, and the air in the tightly attached portion between the connection section 2a and the connection section 3a of the other electrical equipment 3 (the insulation plug) is thereby compressed.

When the connection section 3a of the other electrical equipment 3 is rotated by the torque wrench 23, this compressed air moves in the peripheral direction in the tightly attached portion between the connection section 2a (the terminal component) and the connection section 3a of the other electrical equipment 3 (the insulation plug) and is collected in the space 28 that is formed around the deaeration tool 1 or the deaeration tool 20.

The air that is collected around the deaeration tool 1 or the deaeration tool 20 is released to the atmosphere from the suction port 17, which is provided at the tip or on the side of the deaeration tool 1 or the deaeration tool 20, through the through hole 8 therein.

After the electrical equipment 2 (the terminal component) and the other electrical equipment 3 (the insulation plug) are connected, the deaeration tool 1 or the deaeration tool 20 is pulled out in an E direction in FIG. 19.

In this way, the connection of the other electrical equipment 3 (the insulation plug) is completed in a state where the pressure in the connection section 2a is lowered to the same level as the atmospheric pressure.

In the above-described deaeration work, the paste or the oil, which is used to improve the lubricity between the connection sections of the electrical equipment 2 and the other electrical equipment 3 during the connection, is applied around the deaeration tool 1 during the connection work.

Because the through hole 8 as the vent hole for the air is provided in the deaeration tool 1 or the deaeration tool 20, the deaeration function is not lost even when the paste or the oil is attached.

In the first embodiment to the ninth embodiment of the invention, the switchgear electrical equipment not only means equipment that constitutes the switchgear itself but also means electrical equipment including related equipment that is directly connected to the switchgear, such as the busbar and power cable used with the switchgear to connect the switchgear to an external circuit. That is, components related to the electric connection, such as the terminal component and the insulation plug, are also included in the electrical equipment.

### Reference Signs List

- 1: Deaeration tool
- 2: Electrical equipment (terminal component)
- 2a: Connection section
- 3: Another electrical equipment (insulation plug)
- 3a: Connection section
- 4: Solid-insulated busbar insertion section
- 5: Body
- 6: Tip
- 7: Base
- 8: Through hole
- 9: Recessed section
- 10: Projecting section
- 11: Suction device attachment/detachment section
- 12: Forefront section
- 13: Suction device
- 14: Suctioning section
- 15: Intake chamber
- 16: Constricted section
- 17: Suction port
- 20: Deaeration tool
- 21: Fastening metal insert
- 22: Rotary metal insert
- 22a: Hexagon head
- 23: Torque wrench
- 23a: Drive shaft
- 24: Socket
- 25: Connection conductor
- 26: Stud
- 27, 28:: Space

## Claims

1. A deaeration tool (1, 20) for facilitating the discharge of air remaining in a connection section when an outer wall surface of a projecting connection section (3a) of a second electrical equipment is connected in a tightly attached state to an inner wall surface of a recessed connection section (2a) of a first electrical equipment when connecting the first electrical equipment (2) and the second electrical equipment (3) for a switchgear, wherein the deaeration tool (1,20) is **characterized by** comprising:
- a tubular body (5) that has flexibility and is formed with an air vent hole (8) therein;
- a base (7) that is formed at one end of the body (5) and has a suction device attachment/detachment section (11) adapted to be attached to or detached from a suction device (13); and
- a tip (6) that is formed at the other end of the body (5) on an opposite side from the base (7) and has a suction port (17), and
wherein the air vent hole (8) penetrates an inner portion of the body (5) between the suction port and the base (7), and the air vent hole (8) communicates with the suction port (17) and the suction device attachment/detachment section (11) such that the suction port (17) communicates with the suction device attachment/detachment section (11), and wherein the body (5) is formed with plural recesses (9) and projections (10) that extend in either an orthogonal direction to a longitudinal direction of the deaeration tool (1,20), an oblique direction with respect to said longitudinal direction, or in two oblique directions with respect to said longitudinal direction to form a net shape, and on an outer surface between the tip (6) and the base (7) so as not to hinder the flow of a paste or an oil, which is applied to the inner wall surface, in a peripheral direction of the inner wall surface.

2. The deaeration tool (1, 20) according to claim 1,
**characterized in that**
a second suction port (17) is formed on a side of the body (5) in a manner to communicate with the air vent hole (8).

3. The deaeration tool (1, 20) according to any one of claims 1 or 2,
**characterized in that** a cross-sectional shape of the body (5) is a rectangle with rounded corners or an oval.

4. The deaeration tool (1, 20) according to any one of claims 1 to 3,
**characterized in that** the tip (6) of the body (5) is formed to be gradually narrowed toward an opposite direction from the base (7).

5. The deaeration tool (1, 20) according to any one of claims 1 to 4,
**characterized in that** the tip (6) of the body (5) is painted in a different color from the body (5).

6. The deaeration tool (1, 20) according to any one of claims 1 to 3,
**characterized in that** the tip (6) of the body (5) has a widened section that is wider than the body (5).

7. The deaeration tool (1, 20) according to any one of claim 1 to claim 6,
**characterized in that** the body (5) is made of silicone rubber or ethylene-propylene rubber.

8. The deaeration tool (1, 20) according to any one of claims 1 to 7,
**characterized in that** fibers are mixed in the body (5).

9. A method of manufacturing switchgear electrical equipment for connecting the first electrical equipment (2) and the second electrical equipment (3) for a switchgear that includes a solid-insulated busbar by using the deaeration tool (1, 20) according to any one of claims 1 to 8,
the method of manufacturing the switchgear electrical equipment **characterized by** comprising the steps of:
- attaching the deaeration tool (1, 20) to a joined surface of the connection section (2a) of the first electrical equipment (2);
- tightly attaching the connection section (2a) of the first electrical equipment (2) and another connection section (3a) of the second electrical equipment (3), so as to discharge gas, which is mixed in the joined surface, to the outside via the deaeration tool (1, 20); and
- removing the deaeration tool (1, 20) from the joined surface.

## Patentansprüche

1. Entlüftungswerkzeug (1, 20) zum Erleichtern des Ablassens von Luft, die in einem Verbindungsbereich verbleibt, wenn eine äußere Wandfläche eines vorstehenden Verbindungsbereichs (3a) eines zweiten elektrischen Geräts in einem dicht abschließenden Zustand mit einer inneren Wandfläche eines vertieften Verbindungsbereichs (2a) eines ersten elektrischen Geräts verbunden wird, wenn das erste elektrische Gerät (2) und das zweite elektrische Gerät (3) für eine Schaltanlage verbunden werden,
wobei das Entlüftungswerkzeug (1, 20) **dadurch gekennzeichnet ist,**
**dass** es Folgendes aufweist:
- einen rohrförmigen Körper (5), der flexibel ist und in dem ein Entlüftungsloch (8) ausgebildet ist;
- eine Basis (7), die an einem Ende des Körpers (5) ausgebildet ist und einen Saugvorrichtungs-Befestigungs-/Abnahmebereich (11) aufweist, der dazu geeignet ist, an einer Saugvorrichtung (13) befestigt oder von dieser abgenommen zu werden; und
- eine Spitze (6), die an dem anderen Ende des Körpers (5) auf einer der Basis (7) gegenüberliegenden Seite ausgebildet ist und eine Saugöffnung (17) aufweist, und
wobei das Entlüftungsloch (8) einen inneren Bereich des Körpers (5) zwischen der Saugöffnung und der Basis (7) durchdringt und wobei das Entlüftungsloch (8) mit der Saugöffnung (17) und dem Saugvorrichtungs-Befestigungs-/Abnahmebereich (11) in Verbindung steht, so dass die Saugöffnung (17) mit dem Saugvorrichtungs-Befestigungs-/Abnahmebereich (11) in Verbindung steht,
und wobei der Körper (5) mit mehreren Ausnehmungen (9) und Vorsprüngen (10) ausgebildet ist, die sich entweder in einer orthogonalen Richtung zu einer Längsrichtung des Entlüftungswerkzeugs (1, 20), einer schrägen Richtung in Bezug auf die Längsrichtung, oder in zwei schrägen Richtungen in Bezug auf die Längsrichtung, um eine Netzform zu bilden, und auf einer Außenfläche zwischen der Spitze (6) und der Basis (7) erstrecken, um den Fluss einer Paste oder eines Öls, die auf die innere Wandfläche aufgetragen werden, in einer Umfangsrichtung der inneren Wandfläche nicht zu behindern.

2. Entlüftungswerkzeug (1, 20) nach Anspruch 1,
**dadurch gekennzeichnet,**
**dass** eine zweite Saugöffnung (17) an einer Seite des Körpers (5) so ausgebildet ist, dass sie mit dem Entlüftungsloch (8) in Verbindung steht.

3. Entlüftungswerkzeug (1, 20) nach einem der Ansprüche 1 oder 2,
**dadurch gekennzeichnet, dass** eine Querschnittsform des Körpers (5) ein Rechteck mit abgerundeten Ecken oder ein Oval ist.

4. Entlüftungswerkzeug (1, 20) nach einem der Ansprüche 1 bis 3,
**dadurch gekennzeichnet,**
**dass** die Spitze (6) des Körpers (5) so geformt ist, dass sie sich von der Basis (7) aus allmählich in eine entgegengesetzte Richtung verjüngt.

5. Entlüftungswerkzeug (1, 20) nach einem der Ansprüche 1 bis 4,
**dadurch gekennzeichnet,**
**dass** die Spitze (6) des Körpers (5) in einer anderen Farbe als der Körper (5) lackiert ist.

6. Entlüftungswerkzeug (1, 20) nach einem der Ansprüche 1 bis 3,
**dadurch gekennzeichnet,**
**dass** die Spitze (6) des Körpers (5) einen verbreiterten Bereich aufweist, der breiter als der Körper (5) ist.

7. Entlüftungswerkzeug (1, 20) nach einem der Ansprüche 1 bis 6,
**dadurch gekennzeichnet,**
**dass** der Körper (5) aus Silikonkautschuk oder Ethylen-Propylen-Kautschuk hergestellt ist.

8. Entlüftungswerkzeug (1, 20) nach einem der Ansprüche 1 bis 7,
**dadurch gekennzeichnet,**
**dass** Fasern in den Körper (5) eingemischt sind.

9. Verfahren zur Herstellung einer elektrischen Schaltanlagenvorrichtung zum Verbinden des ersten elektrischen Geräts (2) und des zweiten elektrischen Geräts (3) für eine Schaltanlage, die eine feststoffisolierte Sammelschiene aufweist, unter Verwendung des Entlüftungswerkzeugs (1, 20) nach einem der Ansprüche 1 bis 8,
wobei das Verfahren zur Herstellung der elektrischen Schaltanlagenvorrichtung **dadurch gekennzeichnet ist,**
**dass** es die folgenden Schritte aufweist:
- Anbringen des Entlüftungswerkzeugs (1, 20) an einer verbundenen Fläche des Verbindungsbereichs (2a) des ersten elektrischen Geräts (2);
- dichtes Anbringen des Verbindungsbereichs (2a) des ersten elektrischen Geräts (2) und eines weiteren Verbindungsbereichs (3a) des zweiten elektrischen Geräts (3), um Gas, das in der verbundenen Fläche beigemischt ist, über das Entlüftungswerkzeug (1, 20) nach außen abzuleiten; und
- Entfernen des Entlüftungswerkzeugs (1, 20) von der verbundenen Fläche.

## Revendications

1. Outil d'évacuation d'air (1, 20) destiné à faciliter la décharge d'air restant dans une section de connexion quand une surface de paroi extérieure d'une section de connexion en projection (3a) d'un second équipement électrique est connectée dans un état hermétiquement attaché à une surface de paroi intérieure d'une section de connexion évidée (2a) d'un premier équipement électrique lors une connexion du premier équipement électrique (2) et du second équipement électrique (3) pour un appareillage de commutation, dans lequel l'outil d'évacuation d'air (1, 20) est **caractérisé en ce qu'**il comprend :
- un corps tubulaire (5) qui a une flexibilité et qui est formé avec un trou d'évent d'air (8) dans celui-ci ;
- une base (7) qui est formée à une extrémité du corps (5) et qui a une section d'attachement/détachement (11) de dispositif d'aspiration adaptée pour être attachée à un dispositif d'aspiration (13) ou détachée de celui-ci ; et
- un embout (6) qui est formé à l'autre extrémité du corps (5) sur un côté opposé par rapport à la base (7) et qui a un orifice d'aspiration (17), et dans lequel le trou d'évent d'air (8) pénètre dans une portion intérieure du corps (5) entre l'orifice d'aspiration et la base (7), et le trou d'évent d'air (8) communique avec l'orifice d'aspiration (17) et la section d'attachement/détachement (11) de dispositif d'aspiration de telle sorte que l'orifice d'aspiration (17) communique avec la section d'attachement/détachement de dispositif d'aspiration (11),
et dans lequel le corps (5) est formé avec une pluralité d'évidements (9) et de projections (10) qui s'étendent soit dans une direction orthogonale à une direction longitudinale de l'outil d'évacuation d'air (1, 20), soit dans une direction oblique par rapport à la direction longitudinale, soit dans deux directions obliques par rapport à ladite direction longitudinale pour réaliser une forme de filet, et sur une surface extérieure entre l'embout (6) et la base (7) afin de ne pas empêcher l'écoulement d'une patte ou d'une huile, qui est appliquée sur la surface de paroi intérieure, dans une direction périphérique de la surface de paroi intérieure.

2. Outil d'évacuation d'air (1, 20) selon la revendication 1,
**caractérisé en ce que**
un second orifice d'aspiration (17) est formé sur un côté du corps (5) de manière à communiquer avec le trou d'évent d'air (8).

3. Outil d'évacuation d'air (1, 20) selon l'une quelconque des revendications 1 ou 2,
**caractérisé en ce que**
une forme de section transversale du corps (5) est un rectangle avec des coins arrondis ou un ovale.

4. Outil d'évacuation d'air (1, 20) selon l'une quelconque des revendications 1 à 3,
**caractérisé en ce que**
l'embout (6) du corps (5) est formé pour être rétréci graduellement vers une direction opposée par rapport à la base (7).

5. Outil d'évacuation d'air (1, 20) selon l'une quelconque des revendications 1 à 4,
**caractérisé en ce que**
l'embout (6) du corps (5) est peint dans une couleur différente de celle du corps (5).

6. Outil d'évacuation d'air (1, 20) selon l'une quelconque des revendications 1 à 3,
**caractérisé en ce que**
l'embout (6) du corps (5) a une section élargie qui est plus large que le corps (5).

7. Outil d'évacuation d'air (1, 20) selon l'une quelconque des revendications 1 à 6,
**caractérisé en ce que**
le corps (5) est fait en caoutchouc de silicium ou en caoutchouc éthylènepropylène.

8. Outil d'évacuation d'air (1, 20) selon l'une quelconque des revendications 1 à 7,
**caractérisé en ce que**
des fibres sont mélangées dans le corps (5).

9. Procédé de fabrication d'un équipement électrique d'appareillage de commutation pour connecter le premier équipement électrique (2) et le second équipement électrique (3) pour un appareillage de commutation qui inclut un bus solidement isolé à l'aide de l'outil d'évacuation d'air (1, 20) selon l'une quelconque des revendications 1 à 8,
le procédé de fabrication de l'équipement électrique d'appareillage de commutation étant **caractérisé en ce qu'**il comprend les étapes consistant à :
- attacher l'outil d'évacuation d'air (1, 20) à une surface de jonction de la section de connexion (2a) du premier équipement électrique (2) ;
- attacher hermétiquement la section de connexion (2a) du premier équipement électrique (2) et une autre section de connexion (3a) du second équipement électrique (3), afin de décharger un gaz, qui est mélangé dans la surface de jonction, vers l'extérieur via l'outil d'évacuation d'air (1, 20) ; et
- retirer l'outil d'évacuation d'air (1, 20) de la surface de jonction.
